# EUROPEAN PATENT SPECIFICATION

(11) **EP 1 254 830 B1**
(45) Date of publication and mention of the grant of the patent: **04.03.2009**
(21) Application number: 02291109.3
(22) Date of filing: 02.05.2002
(51) Int. Cl.: B62K 11/08, B62K 19/12, B62K 19/22

(54) **Motorcycle**
Motorrad
Motocyclette

(30) Priority: 02.05.2001 JP 2001134999; 02.05.2001 JP 2001135002; 02.05.2001 JP 2001135013; 22.05.2001 JP 2001152244; 22.05.2001 JP 2001152254
(43) Date of publication of application: 06.11.2002
(73) Proprietor: Yamaha Hatsudoki Kabushiki Kaisha, Iwata-shi, Shizuoka-ken (JP)
(72) Inventor: Inoue, Yushi, c/o Yamaha Hatsudoki Kabushiki Kaisha, Shizuoka-ken (JP); Koike Toshikatsu , c/o Yamaha Hatsudoki Kabushiki Kaisha, Shizuoka-ken (JP); Kurachi, Makoto, c/o Kam Techno-Plan INC., Iwata- City, Shizuoka (JP)
(74) Representative: Intes, Didier Gérard André

(56) References cited:
- WO-A-95/27648
- CH-A- 318 349
- DE-B- 1 044 650
- FR-A- 2 364 598
- JP-A- 59 077 991
- RO-B- 113 832
- PATENT ABSTRACTS OF JAPAN vol. 017, no. 697 (M-1532), 20 December 1993 (1993-12-20) & JP 05 238462 A (SUZUKI MOTOR CORP), 17 September 1993 (1993-09-17)
- PATENT ABSTRACTS OF JAPAN vol. 2000, no. 13, 5 February 2001 (2001-02-05) & JP 2000 280962 A (HONDA MOTOR CO LTD), 10 October 2000 (2000-10-10)

## Description

The present invention relates to a motorcycle according to claim 1.

Conventionally, there is a vehicle body frame for a motorcycle of this kind disclosed in, for example, JP-A-2000-280962. The vehicle body frame for a motorcycle disclosed in the publication is integrally formed with a head pipe, a down frame extended from the head pipe in a rear downward direction and a seat frame extended in an upward direction from a rear end portion of the down frame by casting. The casting is carried out by using dies separated in an up and down direction.

Therefore, the head pipe and the seat frame are molded in a cylindrical shape extended in the up and down direction by cylindrical cavities of the two upper and lower dies. The down frame is molded in an inverse-U-like shape in a section thereof opened to a lower side by making a projected portion of the lower die face from a lower side into a recessed portion of the cavity of the upper die.

The vehicle body frame molded by casting in this way is mounted with an engine at a portion thereof connected with a rear end portion of the down frame and a lower end portion of the seat frame.

The motorcycle is contained with a fuel tank on an inner side of the down frame molded as described above.

Further, the motorcycle is mounted with an engine on a lower side of the down frame such that a cylinder thereof is directed to a front direction of the vehicle body and contained with a carburetor and an air cleaner on an inner side of the down frame.

Further, there is a vehicle body frame for a motorcycle of this kind disclosed in JP-A-2000-233782. According to the vehicle body frame for a motorcycle disclosed in the publication, in addition to the vehicle body frame disclosed in JP-A-2000-280962, mentioned above, a portion of an air cleaner case is formed by a frame at the portion of the rear end portion of the down frame having the section in the inverse-U-like shape directed downwardly. Further, a frame of a motorcycle disclosed in JP-A-59-077991, is constituted by a front frame having a head pipe and formed by bonding left and right half portions and a rear frame integrally molded with a seat frame and an engine and formed by bonding left and right half portions . Further, all of sectional shapes of the down frame, the rear end portion of the down frame and the seat frame are molded in closed sections.

The above-described vehicle body frames fabricated by casting disclosed in JP-A-2000-280962 and JP-A-2000-233782, pose a problem that fabrication cost becomes high. This is because the cylindrical cavity for molding the head pipe and the cylindrical cavity for molding the seat frame are formed at two end portions of the dies, the cavity for molding the down frame is formed between the cylindrical cavities and therefore, cost for fabricating the dies becomes high. Further, the weight is increased to compensate for a reduction in the rigidity of the vehicle body frame.

Further, according to the above-described frame of the motorcycle disclosed in JP-A-59-077991, the sectional shapes of the frames are constituted by the closed sections and therefore, there is a limitation in utilizing inner spaces of the frames. Further, the front and the rear frames are bonded between the head pipe and the seat frame and therefore, the rigidity of a total of the frames is reduced and weight of the frames is increased to compensate therefor.

Further, according to the above-described vehicle body frame, the down frame is opened to the lower direction over an entire region of a forming range thereof and therefore, there poses a first problem that the rigidity is reduced. Further, mud, water or the like splashed by a front wheel is liable to invade from the lower opening of the down frame into the down frame and therefore, in order to arrange an electric equipment in the down frame, a strict water-proof structure needs to adopt and cost is increased also from this respect.

Further, according to the conventional motorcycle constituted as described above, in order to increase the strength of the fuel tank, for example, a thickness thereof needs to form thickly and therefore, there poses a second problem that the weight becomes heavy. This is because the fuel tank is exposed to the lower side from the lower end opening portion of the down frame. That is, because the fuel tank is formed such that when a foreign matter such as a pebble splashed by the front wheel is struck from the lower side to the fuel tank, the fuel tank is not deformed.

Further, according to the automatic motorcycle constituted as described above, the air cleaner is contained in a narrow space at inside of the down frame and therefore, there poses a third problem that only a small-sized air cleaner having a small capacity can be used.

The inventors conceive to cast the above-described vehicle body frame by dividing the vehicle body frame into a half portion on the left side of the vehicle body and a half portion on the right side of the vehicle body and bonding together the two half portions . This is because when the sectional shape of the down frame is constituted by the section in the inverse-U-like shape opened to the lower side, the rigidity is reduced. That is, because by adopting the structure of bonding the half portion on the left side of the vehicle body and the half portion on the right side of the vehicle body, the down frame can be formed in the closed sectional shape and an increase in the rigidity can be achieved.

However, the down frame needs to be inserted with accessories at a hollow portion formed at an inner portion thereof and formed with an opening portion to carry out maintenance of the accessories and therefore, there poses a fourth problem that a portion having high rigidity and a portion having low rigidity are formed and the engine cannot be supported with excellent balance.

Further, according to the conventional motorcycle constituted as described above, there poses a problem that temperature of the carburetor becomes high, the charge efficiency of intake air is reduced and the output of the engine is reduced. The temperature of the carburetor is elevated because running wind cannot flow in the down frame of the vehicle body frame and air warmed by the engine stays in the down frame.

In order to resolve such a drawback, there may be constructed a constitution in which a draft hole is formed in the down frame and running wind is exhausted outwardly from inside of the down frame via the draft hole. However, by forming the draft hole in the vehicle body frame, there poses a fifth problem that the rigidity of the vehicle body franc is reduced.

Furthermore, WO 95/27648 discloses a body frame molded by casting and comprising left and right half portions bonded together. In accordance with the present invention there is provided a motorcycle as set out in claim 1. Preferred embodiments of the present invention are laid down in the dependent claims.

The invention has been carried out in order to resolve the first problem and it is a first object thereof to provide a motorcycle having a vehicle body frame having a high rigidity and a relatively low fabrication cost.

Further, the invention has been carried out in order to resolve the second problem and it is a second object thereof to achieve light-weighted formation of a fuel tank contained in a down frame.

Further, the invention has been carried out in order to resolve the above-described third problem and it is a third object thereof to provide a large-sized air cleaner having a large capacity in a vehicle body frame.

Further, the invention has been carried out in order to resolve the fourth problem and it is a fourth object thereof to support an engine while excellently maintaining balance of strength and rigidity of a down frame formed by bonding together two left and right half portions.

Further, the invention has been carried out in order to resolve the above-described fifth problem and it is a fifth object thereof to be able to firmly cool a carburetor by running wind while achieving an increase in the rigidity of a vehicle body frame by downsizing a draft hole formed at the vehicle body frame.

In order to achieve the first object, a first aspect of the invention is a motorcycle having a vehicle body frame molded by casting, wherein said vehicle body frame comprises:
a half portion on a left side of the vehicle body and a half portion on a right side of the vehicle body, each of the half portions including:
   a down frame extended downwardly from a head pipe toward a rear of a vehicle body; and
   a seat frame extended from a rear end portion of the down frame toward an upper side of the vehicle body, the down frame and the seat frame being integrally molded with each other, wherein when the vehicle body frame is formed by bonding together the half portion on the left side of the vehicle body and the half portion on the right side of the vehicle body, at least a portion of the down frame in a vicinity of the head pipe cooperatively forms a portion having a closed section, and wherein said vehicle body frame defines:
      an opening portion opened to a lower side of the vehicle body and formed at the rear end portion of the down frame; and
      a hollow portion formed at least at a portion of the portion having the closed section, the hollow portion being communicated to an inner space of the opening portion, wherein said vehicle body frame further comprises a cross member provided at the opening portion, for connecting the half portion on the left side of the vehicle body and the half portion on the right side of the vehicle body to horizontally bridge, and wherein a front side bracket for supporting the front portion of the engine is attached by a bolt for attaching the cross member.

According to the invention, owing to the shape constituted by integrally molding the head pipe, the down frame and the seat frame and forming the portion of the down frame at a vicinity of the head pipe by the portion having the closed section in the closed sectional shape, the rigidity withstanding impact inputted from the front wheel of the motorcycle to the head pipe, can be ensured without increasing the weight and light-weighted formation of the vehicle body is achieved. Further, the half portion on the left side of the vehicle body and the half portion on the right side of the vehicle body are bonded together and therefore, the dies become simple and the head pipe and the seat frame of the vehicle body frame can be molded without using a core.

In this case, in the motorcycle having the vehicle body frame integrally formed with the down frame extended from the head pipe in the rear downward direction and the seat frame extended from the rear end portion of the down frame to the upper side, there may be provided the vehicle body frame formed by bonding together the half portion on the left side of the vehicle body and the half portion on the right side of the vehicle body molded by casting.

Further, in this case, according to the vehicle body frame for a motorcycle, there may be constructed a constitution in which the half portion on the left side of the vehicle body and the half portion on the right side of the vehicle body are formed by being bonded to each other and the two half portions may be molded by casting.

According to the invention, with regard to dies for molding the half portion on the right side of the vehicle body and the half portion on the left side of the vehicle body, a cavity can be formed into a simple shape by a recessed portion and a projected portion and the structure become simpler than a structure of separating the dies in an up and down direction.

Further, the vehicle body frame for a motorcycle according to the invention can be formed in the closed sectional shape over an entire region of a forming range. Further, access can easily be made to the hollow portion from a portion in a U-like shape directed downwardly and therefore, an inner space of the portion having the closed section can effectively be utilized.

Further, in a vehicle body frame for a motorcycle according to the first aspect of the invention, it is preferable that the half portion on the left side of the vehicle body and the half portion on the right side of the vehicle body are formed in a shape of forming the hollow portion at an inner portion thereof in a bonded state.

According to the invention, light-weighted formation can be achieved in comparison with the case of solidly forming the two half portions.

Further, in the vehicle body frame for a motorcycle according to the first aspect of the invention, it is preferable that the headpipe is formed to divide in a vehicle width direction and integrally formed respectively with the half portion on the left side of the vehicle body and the half portion on the right side of the vehicle body of the vehicle body frame and in a state of bonding together the two half portions, a ring-like member is bonded to an end portion in an axial line direction of the head pipe.

A bearing for a steering shaft can be press-fitted to and held by the ring-like member.

Further, in the vehicle body frame for a motorcycle according to the first aspect of the invention, it is preferable that the half portion on the left side of the vehicle body and the half portion on the right side of the vehicle body are bonded by a solid phase bonding process.

According to the solid phase bonding process, in comparison with other welding process, a strain of a product after bonding is reduced and therefore, correcting operation after bonding is dispensed with or only simple correcting operation may be carried out after bonding.

In order to achieve the second object, with regard to a motorcycle according to a fourth aspect of the invention, in the third aspect of the invention, it is preferable that the motorcycle further comprises: a fuel tank arranged within the down frame, wherein at least a portion of the fuel tank is arranged at the hollow portion. Further, in this case, there may be constructed a constitution in which the down frame extended from the head pipe in the rear downward direction is formed in the closed sectional shape, a rear end portion of the down frame is opened to a lower side and the fuel tank is contained in the down frame by constituting a port for putting in and out the fuel tank by the opening.

According to the fourth aspect of the invention, a surrounding of the fuel tank is covered by the down frame, the fuel tank is not exerted with external force and therefore, the fuel tank can be formed such that strength thereof is relatively lowered.

With regard to the motorcycle according to the fourth aspect of the invention, it is preferable that a cylindrical member is projected from a front end portion of the fuel tank to direct to an upper side, the cylindrical member is inserted into and fixed by an attaching hole for the cylindrical member of the down frame and a rear end portion of the fuel tank is supported by a bracket horizontally bridged to an opening at a rear end portion of the down frame.

The front portion of the fuel tank can be attached to the down frame by utilizing the cylindrical member of the fuel tank. Further, the rear end portion of the down frame can be reinforced by the bracket for supporting the rear end portion of the fuel tank.

In order to achieve the third object, a motorcycle according to a fifth aspect of the invention, in the second aspect of the invention, it is preferable that the motorcycle, wherein said vehicle body frame defines an opening portion opened to a lower side of the vehicle body and formed at the rear end portion of the down frame, the down frame disposed at a further front portion of the vehicle body than the opening portion and the seat frame are constituted by portions having closed sections, and the vehicle body frame further comprises a portion of an air cleaner case formed at least at the portions having the closed sections. Further, in this case, there may be constructed a constitution in which the vehicle body frame is formed by bonding together a frame half portion on the left side of the vehicle body and a frame half portion on the right side of the vehicle body, the air cleaner case is integrally formed with either one of the two half portions, the air cleaner case is opened with an attaching and detaching port for an air cleaner element closed by a lid member to direct to a side direction of the vehicle body and an intake air flow out port is formed on an inner side of the vehicle body.

According to the fifth aspect of the invention, the air cleaner can be formed by mounting an element to an air cleaner case integrally formed with the vehicle body frame and attaching the lid member. Therefore, in comparison with a case of forming a member exclusively used as an air cleaner case separately from the vehicle body frame and containing the member in the vehicle body frame, the air cleaner case having a large capacity can be formed by widely utilizing a space in the vehicle body frame. Further, a member such as a bracket for fixing the air cleaner case to the vehicle body frame is dispensed with.

Further, in this case, with regard to the motorcycle according to the invention described in the fifth aspect of the invention, it is preferable that the air cleaner case is formed on an upper side of a crankcase of an engine and an upper end portion of a pipe for leading out blowby gas projected from the crankcase is connected to a lower end portion of the air cleaner case.

The pipe for leading out blowby gas can be formed to be short and a member for supporting the pipe is dispensed with. Therefore, a space occupied by a member used for leading blowby gas to the air cleaner can be narrowed and the air cleaner case can be formed to be large by that amount.

In order to achieve the fourth object, a motorcycle according to a sixth aspect of the invention, in the second aspect of the invention, it is preferable that the motorcycle, wherein said vehicle body frame defines an opening portion opened to a lower side of the vehicle body and formed at the rear end portion of the down frame, the down frame disposed at a further front portion of the vehicle body than the opening portion and the seat frame are constituted by portions having closed sections, and the vehicle body frame further comprises an engine attaching portion formed at least at the portions having the closed sections. Further, in order to achieve the fourth object, a motorcycle according to a seventh aspect of the invention, in the second aspect of the invention, it is preferable that the motorcycle, wherein said vehicle body frame defines an opening portion opened to a lower side of the vehicle body and formed at the rear end portion of the down frame, the vehicle body frame further comprises a cross member provided at the opening portion, for connecting the half portion on the left side of the vehicle body and the half portion on the right side of the vehicle body, and a portion having a closed section is formed by the half portion on the left side of the vehicle body, the half portion on the right side of the vehicle body and the cross member, and a portion for attaching an engine is formed at the portion having the closed section. Further, in this case, there may be constructed a constitution in which according to the vehicle body frame for the motorcycle, the down frame extended from the head pipe in the rear downward direction, is formed by bonding together a right side half portion having a sectional shape opened to the left side of the vehicle body and a left side half portion having a sectional shape opened to the right of the vehicle body, a rear end portion of the down frame is formed in a closed sectional shape, a middle portion thereof disposed on a further front side of the vehicle body than the rear end portion, is formed by a section in a U-like shape directed to a lower side and the cross member is horizontally bridged to an opening portion at a lower end of a middle portion, a front portion of the engine is supported by the cross member and two portions in an up and down direction of a rear end portion of the engine are supported by the rear end portion.

According to the sixth aspect and the seventh aspect of the invention, the two portions of the rear end portion of the engine are supported by the rear end portion having relatively high rigidity of the down frame, the middle portion having relatively low rigidity is reinforced by the cross member, the front portion of the engine is supported thereby and therefore, load by mounting the engine can similarly be exerted to the rear end portion and the middle portion of the down frame.

Further, in this case, in the motorcycle according to the sixth aspect of the invention, it is preferable that abracket for supporting the engine is fixed to the rear end portion of the down frame and the rear end portion of the engine is supported by the down frame via the bracket.

Vibration transmitted from the rear end portion of the engine to the vehicle frame and impact by drive force of the engine can be reduced by making the bracket for supporting the engine function as an elastic member having rigidity lower than that of a frame having a closed sectional shape.

Further, in this case, it is preferable to interpose an elastic member to at least one of two portions of supporting portions for supporting the rear end portion of the engine.

Vibration of the engine transmitted to the vehicle body frame can be reduced by the elastic member.

In order to achieve the fifth object, a motorcycle according to an eighth aspect of the invention, in the seventh aspect of the invention, it is preferable that the motorcycle, wherein the down frame defining the opening portion further defines: an another opening portion defined remote from the portion having the closed section formed by the half portion on the left side of the vehicle body, the half portion on the right side of the vehicle body and the cross member in a front and rear direction of the vehicle body.

According to the eighth aspect of the invention, air draft performance and maintenance performance can be promoted without deteriorating rigidity and the opening may be an opening for the draft or an opening for maintenance.

That is, in this case, there may be constructed a constitution in which the carburetor and the air cleaner are distributed to one side and other side in the vehicle width direction, the carburetor is disposed on the front side of the vehicle body and the carburetor and the air cleaner are arranged to aligned in the front and rear direction and a draft hole opened in a skewed rear direction is formed at a portion corresponding to a portion of connecting the carburetor and an intake air duct of the air cleaner at a side of the vehicle body frame proximate to the carburetor.

A path of running wind constituting an outlet by the draft hole is formed at inside of the vehicle body frame and running wind is made to flow at inside of the vehicle body frame in running. According to the running wind, a flow rate thereof is relatively increased at one end portion in the vehicle width direction formed with the draft hole since the draft hole is formed on the one end side in the vehicle width direction and other end side is blocked by the intake air duct and the air cleaner. The carburetor is disposed at the portion at which the flow rate is increased and therefore, the carburetor can efficiently be cooled by the running wind.

Further, operation of connecting the intake air duct to the carburetor can be carried out from the draft hole and therefore, in comparison with a case of forming an opening for exclusively carrying out the operation, an opening formed at the vehicle body frame can be reduced.

Further, in this case, in the motorcycle according to the eighth aspect of the invention, it is preferable to expose an adjusting screw of the carburetor from the draft hole.

Maintenance of the carburetor can be carried out from the draft hole.

A detailed explanation will be given of an embodiment of a motorcycle and a vehicle body frame for a motorcycle according to the invention in reference to Fig. 1 through Fig. 21C as follows.

Fig. 1 and Fig. 2 are side views of a motorcycle using a frame for a motorcycle according to the invention, Fig. 3 is a side view showing to enlarge a portion of mounting an engine and Fig. 4 is a side view showing a portion of attaching an engine of a vehicle body frame and the drawing is illustrated in a state of breaking a portion thereof.

Fig. 5 is a side view showing a portion of supporting a rear end portion of a fuel tank and the drawing is illustrated in a state of breaking a portion thereof.

Fig. 6 is a plane view of a cross member for supporting a front portion of an engine and Fig. 7 is a plane view showing an engine and a portion of a vehicle body frame and the drawing is illustrated in a state of breaking a portion of the vehicle body frame.

Fig. 8 is a sectional view taken along a line V-V of a vehicle body frame and a portion of an engine in Fig. 3, Fig. 9 is a sectional view taken along a line VI-VI of a vehicle body frame and a portion of an engine in Fig. 3, Fig. 10 and Fig. 11 are sectional views taken along a line VII-VII of a vehicle body frame in Fig. 3, Fig. 12 is a cross-sectional view of a head pipe and Fig. 13 is a sectional view showing to enlarge a portion of supporting a front portion of a fuel tank.

Figs. 14A and 14B and Fig. 15 are views showing other example of forming a head pipe.

Fig. 16 is a sectional view taken along a line X-X in Fig. 5 and Fig. 17 is a cross-sectional view of damper rubber for a fuel tank.

Fig. 18 is a sectional view of a vehicle body frame and an air cleaner and a breaking position of the drawing is indicated by a line XII-XII in Fig. 3.

Figs. 19A through 19C are views showing a cover for an air cleaner, Fig. 19A is a side view showing a state of being fixed to the vehicle body frame, Fig. 19B is a top view of the cover and Fig. 19C is a side view of the cover viewed from a left side of a vehicle body.

Figs. 20A through 20D are views showing a cover for an exhaust port of a vehicle body frame, Fig. 20A is a front view, Fig. 20B is a sectional view taken along a line B-B in Fig. 20A, Fig. 20C is a sectional view taken along a line C-C in Fig. 20A and Fig. 20D is a sectional view taken along a line D-D in Fig. 20A.

Figs. 21A through 21C are views showing other embodiment of a vehicle body frame.

In these drawings, what is designated by notation 1 is a motorcycle according to the embodiment. The motorcycle 1 is assembled by using a vehicle body frame 2 according to the invention. Notation 3 designates an engine, notation 4 designates a front wheel, notation 5 designates a front fork, notation 6 designates a steering handlebar, notation 7 designates a rear wheel, notation 8 designates a rear arm, notation 9 designates a cushion unit, notation 10 designates a seat and notation 11 designates a fuel tank.

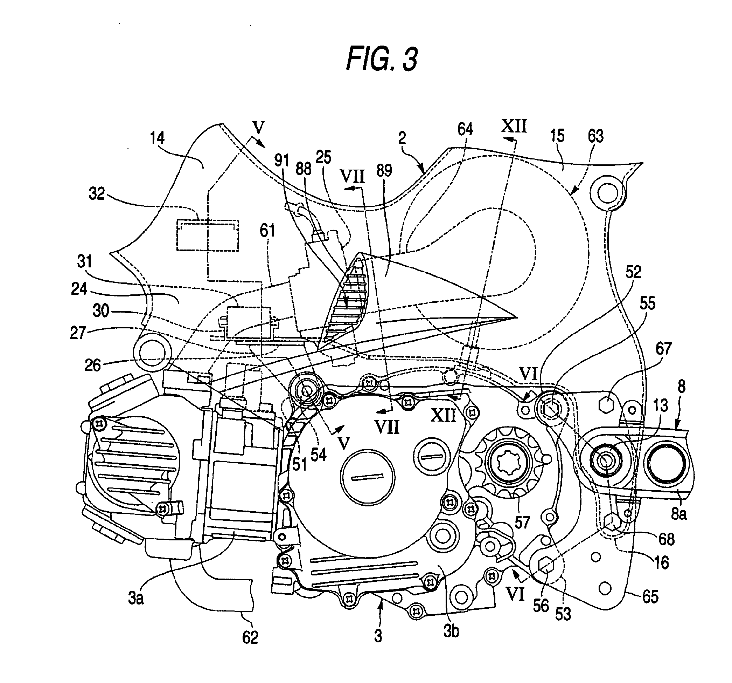

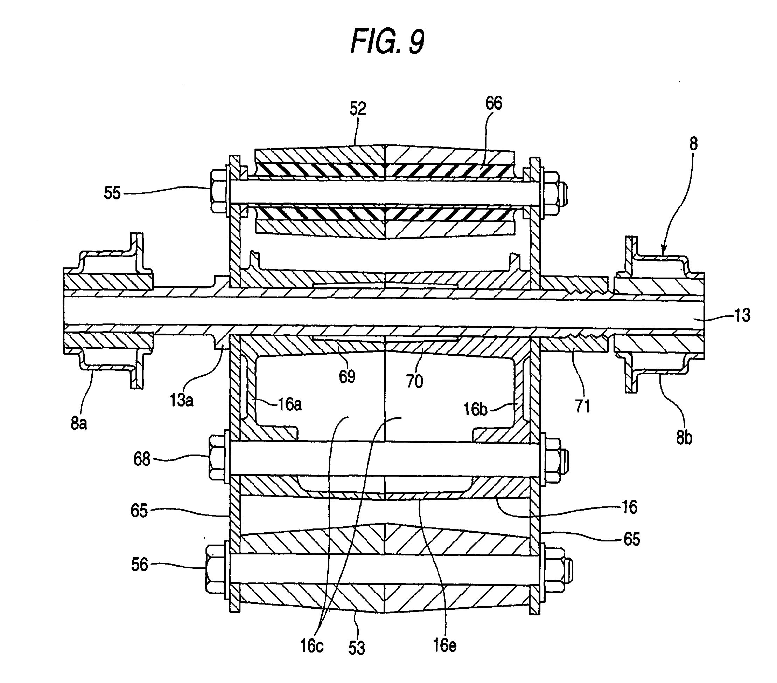

A telescopic type of the front fork 5 is used and is pivotably supported by a head pipe 12 of the vehicle body frame 2, mentioned later. The rear frame 8 is provided with a left side arm 8a and a right side arm 8b (refer to Fig. 9) on both sides of the rear wheel 7 and is pivotably supported by the vehicle body frame 2 via a pivoting shaft 13 (refer to Figs. 3, 9). The cushion units 9 are respectively interposed between middles of the respective arm 8a and 8b of the rear arm 8 and the vehicle body frame 2.

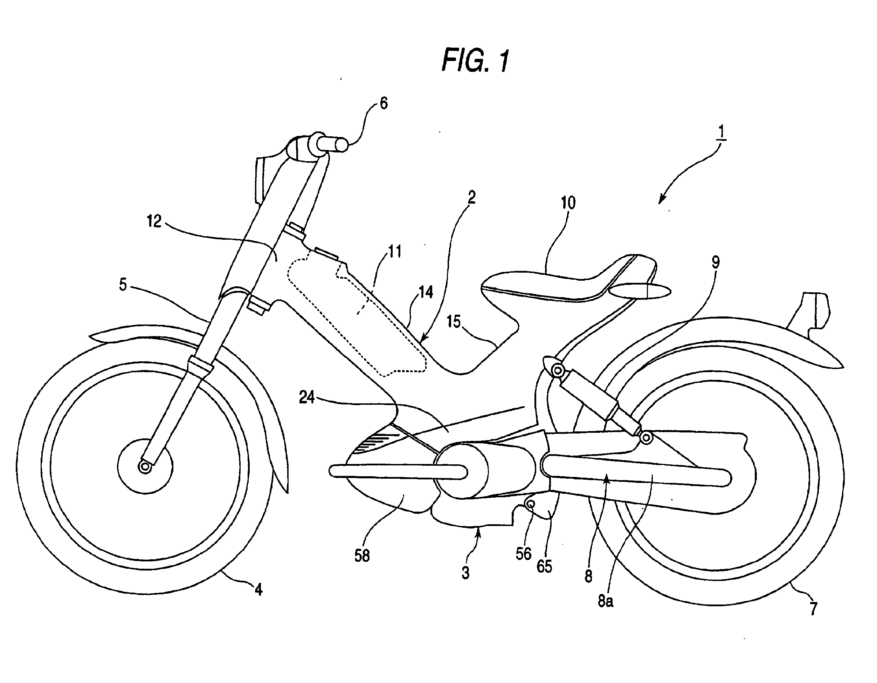

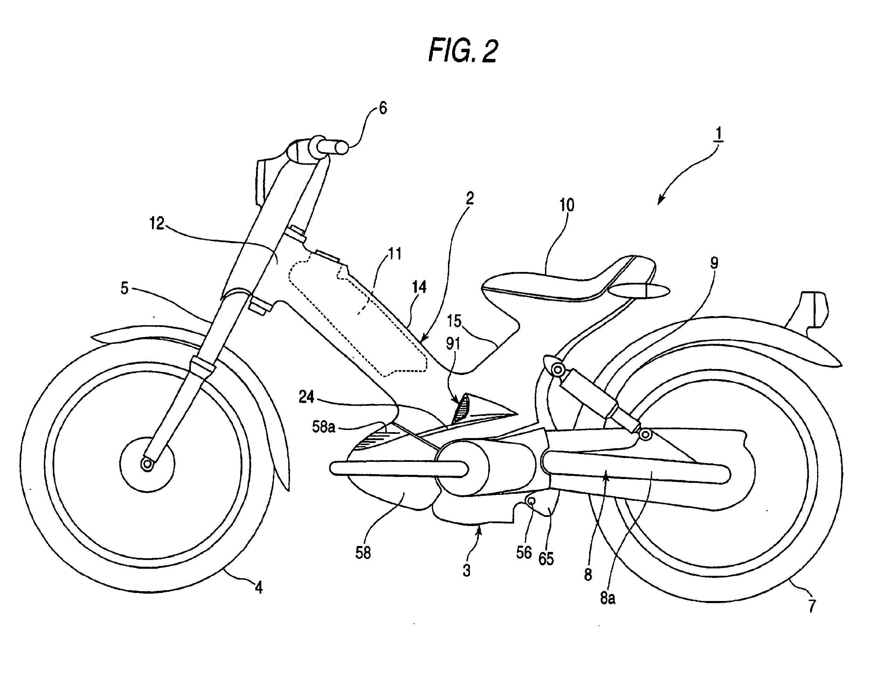

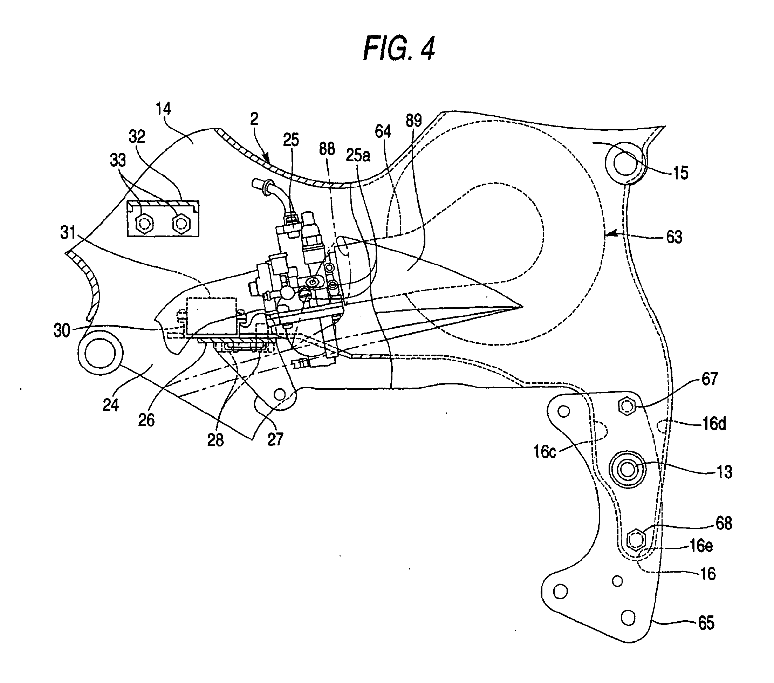

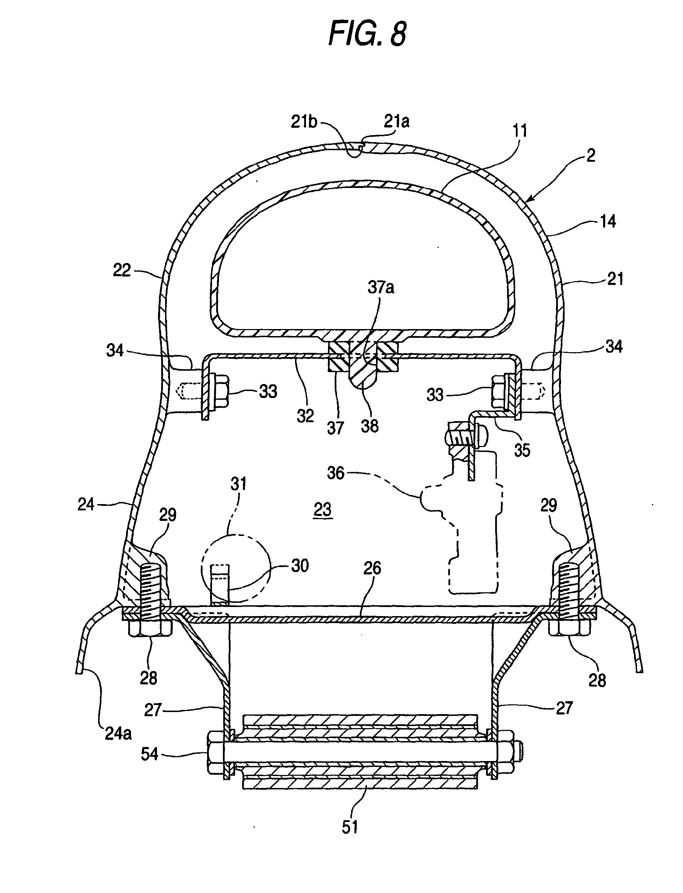

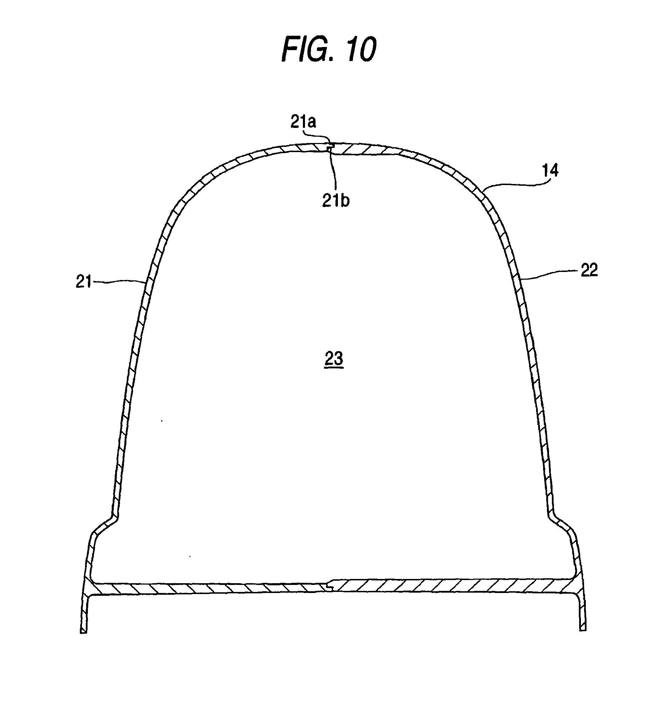

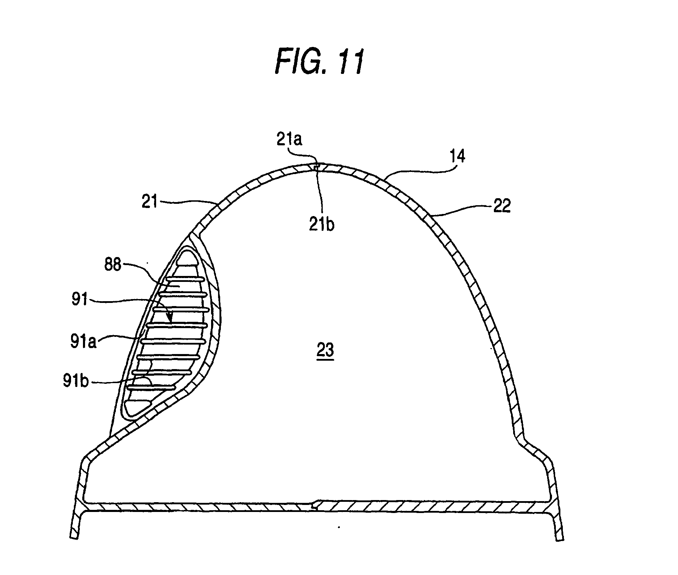

As shown by Figs. 1 and 2, the vehicle body frame 2 is integrally formed with the head pipe 12, a down frame 14 extended from the head pipe 12 in a rear downward direction, a seat frame 15 extended to an upper side from a rear end portion of the down frame 14 and a rear frame 16 (refer to Figs. 3, 4) extended to a lower side from the rear end portion of the down frame 14. Describing in details, as shown by Figs. 8, 10 and 11 and Fig. 12, the vehicle body frame 2 is formed by bonding together a half portion 21 on the left side of the vehicle body and a half portion 22 on the right side of the vehicle body by a friction agitation bonding process.

The two half portions 21 and 22 are respectively molded by casting, the half portion 21 on the left side of the vehicle body is formed in a sectional shape opened to the right side of the vehicle body and the half portion 22 on the right side of the vehicle body is formed in a sectional shape opened to the right side of the vehicle body. That is, there are used dies (not illustrated) for molding the two half portions 21 and 22 having a structure forming a cavity by a recessed portion and a projected portion and a female die having the recessed portion and a male die having the projected portion are brought into contact with each other and separated from each other in a vehicle width direction.

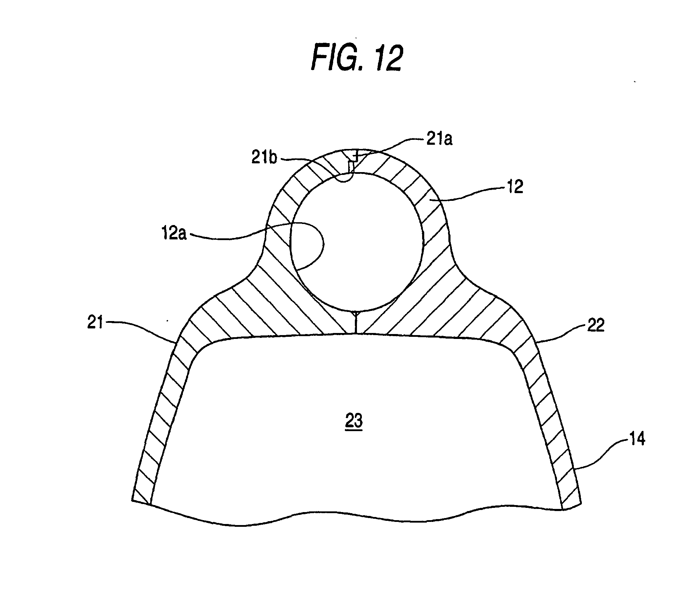

Further, as shown by Figs. 8, 10 and 11 and Fig. 12, the half portion 21 on the left side of the vehicle body is formed with a projected streak 21a at an end edge thereof on an inner side of the vehicle body and the half portion 22 and the right side of the vehicle body is formed with a recessed groove 21b fitted with the streak 21a at an end edge thereof on an inner side of the vehicle body. In order to bond together the two half portions 21 and 22, the bonding is carried out by fitting the recessed groove 21b and the projected streak 21a to overlap each other in a thickness direction and bringing a rotating tool for friction agitation bonding into contact with an outer face under the state. After the bonding, a hole 12a (refer to Fig. 12) in the head pipe 12 is honed by mechanical working and the head pipe 12 is adjusted to constitute a predetermined dimension. According to the embodiment, the end edge portion of the half portion 22 on the right side of the vehicle body for forming the recessed groove 21b, is formed such that a thickness thereof is thicker than that of the other portion. This is for preventing a bonded portion from being deformed by buckling by being pressed by the rotating tool when the friction agitation bonding is carried out.

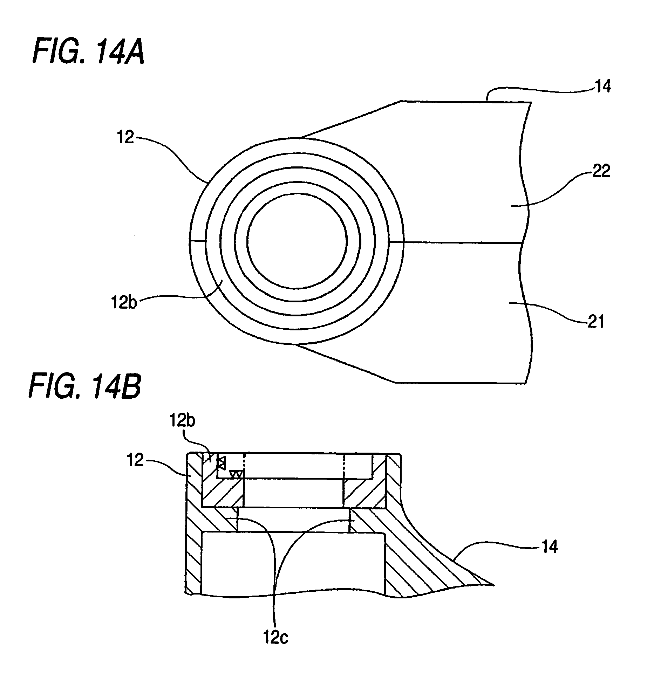

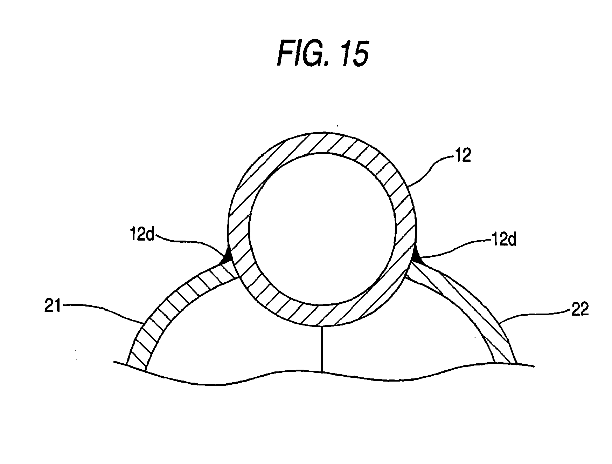

The head pipe 12 can be formed as shown by Figs. 14A and 14B and Fig. 15 other than forming as described above. Figs. 14A and 14B and Fig. 15 are views showing other examples of forming the head pipe, Fig. 14A is a plane view and Fig. 14B is a vertical sectional view.

The head pipe shown in Figs. 14A and 14B are fixedly attached with rings 12b for respectively press-fitting bearings at opening portions of an upper end and a lower end thereof. In order to fixedly attaching the ring 12b to the head pipe 12, the operation can be carried out by a friction agitation bonding process, brazing, welding or the like.

According to the ring 12b, an inner peripheral portion thereof is finished by honing or the like after being fixedly attached to the head pipe 12. A position and a shape of the inner peripheral face of the ring 12b prior to carrying out the post working are indicated by two-dotted chain lines in Fig. 14B. By press-fitting the bearings for supporting a steering shaft to the rings 12b, load in press-fitting can be prevented from being applied to the head pipe 12. Therefore, the steering shaft (not illustrated) can axially be supported solidly while adopting a structure of forming the head pipe 12 by the two left and right half portions 21 and 22. In Fig. 14B, what is designated by notation 12c facing inside of the head pipe 12, is an inner flange for positioning the ring 12b in an axial line direction. The inner flanges 12c are formed respectively integrally with the two left and right half portions 21 and 22.

The head pipe 12 shown in Fig. 15 is formed separately from the two left and right half portions 21 and 22 and is welded to the two half portions. A welded portion is designated by notation 12d.

By bonding the half portion 21 on the left side of the vehicle body and the half portion 22 on the right side of the vehicle body in this way, a hollow portion 23 is formed at an inner portion of the vehicle body frame 2. According to the vehicle body frame 2, other portion except a middle portion 24 in the front and rear direction in correspondence with a front portion of the engine 3, is formed in a closed sectional shape and accessories of the fuel tank 11, a carburetor 25 and the like are inserted and attached from an opening formed at a lower end of the middle portion 24 into the hollow portion 23.

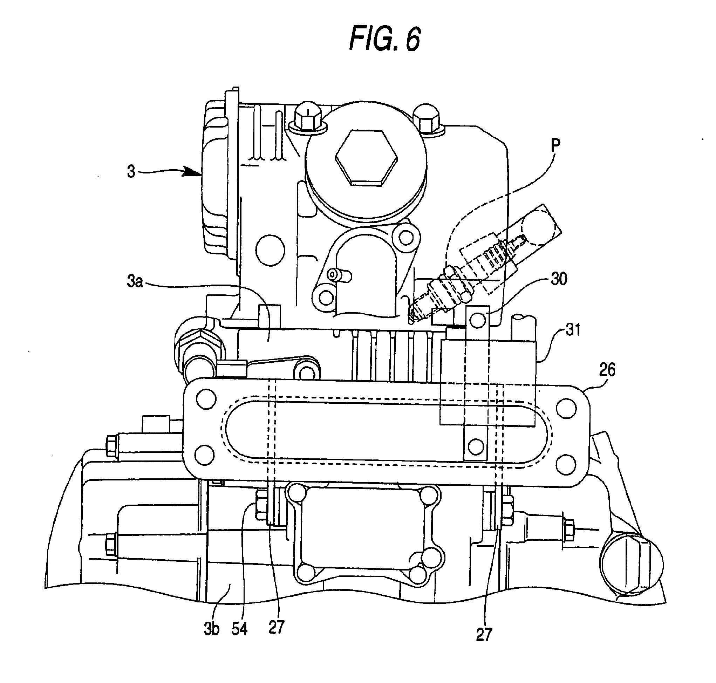

As shown by fig. 8, the middle portion 24 is opened toward the lower side by forming a section thereof in a U-like shape directly downwardly and at a lower end opening portion 24a, a cross member 26 is made to span the half portion 21 on the left side of the vehicle and the half portion 22 on the right side of the vehicle body to horizontally bridge. As shown by Figs. 3 and 6 and Fig. 8, a front side bracket 27 for supporting the front portion of the engine is attached by a bolt 28 for attaching the cross member.

The attaching bolts 28 are screwed from the lower side to attaching seats 29 of the two left and right half portions 21 and 22 such that the attaching bolts 28 can simply be attached to and detached from the lower end opening portion. Further, an upper face of the right side portion (left side portion in Fig. 8) of the cross member 26 is attached with a coil 31 via a bracket 30 for coil. The coil 31 is for supplying electricity to an ignition plug P of the engine 3.

In Fig. 8, what is designated by notation 32 is a bracket for supporting a rear end portion of the fuel tank 11. The bracket 32 is formed in a shape of a gate opened to the lower side and both end portions thereof are fixed to the two left and right half portions 21 and 22 of the vehicle body frame 2 by fixing bolts 33. The fixing bolts 33 are screwed from inner sides of the vehicle body to attaching seats 34 of the two half portions 21 and 22.

That is, the bracket 32 is horizontally bridged to an opening of a rear end portion of the down frame 14. The fixing bolts 33 are screwed from the inner sides of the vehicle body to the attaching seats 34 of the two half portions 21 and 22.

According to the embodiment, in the left and right fixing bolts 33, by the fixing bolt 33 on the left side of the vehicle body, a bracket 35 for supporting a fuel cock and the bracket 32 for supporting the fuel tank are fastened together to the half portion 21 on the left side of the vehicle body. The fuel cock attached to the bracket 35 for supporting the fuel cock is designated by notation 36 in Fig. 8.

The fuel tank 11 is molded by a blow molding process or a rotary molding process with synthetic resin as a material, the rear end portion is supported by the bracket 32 for supporting the fuel tank and a front end portion thereof is supported by the down frame 14 for the vehicle body frame. The rear end portion of the fuel tank is supported by attaching a gromet 37 to the bracket 32 and fitting a supporting projection 38 projected to the lower side at the rear end portion of the fuel tank from the upper side to a support hole 37a of the gromet 37.

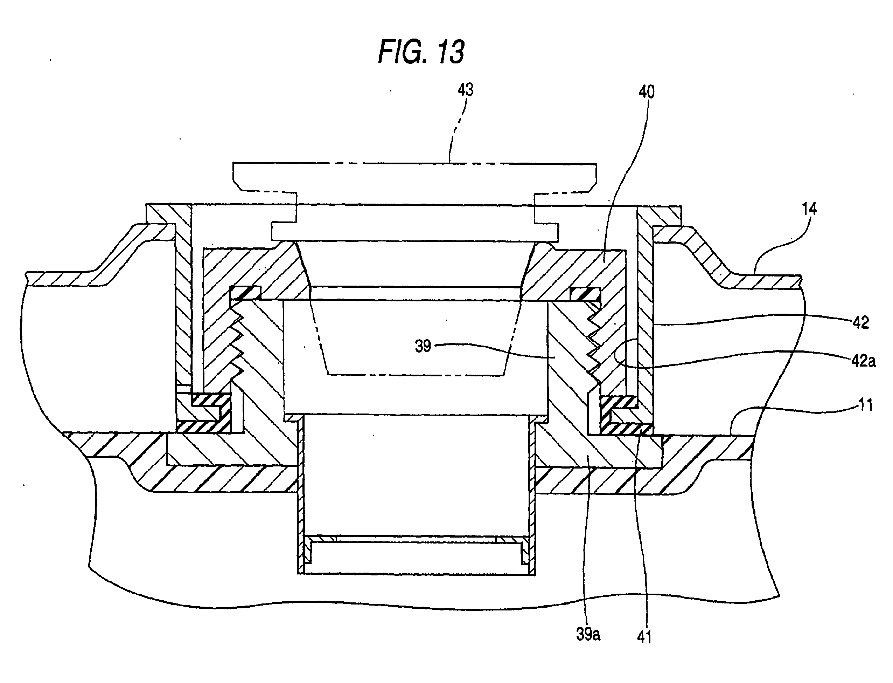

As shown by Fig. 13, the front end portion of the fuel tank is supported by screwing a fixing nut 40 to a cylindrical member 39 integrally projected from the fuel tank 11 by insert molding and sandwiching a supporting cylinder 42 of the vehicle body frame 2 between the fixing nut 40 and a flange 39a constituting a base portion of the cylindrical portion via a seal member 41.

An inner peripheral portion 42a of the supporting cylinder 42 constitutes a hole for attaching the cylindrical member . In Fig. 13, notation 43 designates an oil filler cap.

The engine 3 of the motorcycle 1 is a 4-cycle air-cooled single cylinder engine, as shown by Fig. 3, a cylinder 3a is arranged such that an axial line thereof is directed in the front and rear direction of the vehicle body and attaching bosses 51 through 53 at three locations provided at a crankcase 3b are attached to the vehicle body frame 2 respectively by attaching bolts 54 through 56. Power of the engine 3 is transmitted from an output sprocket 57 provided at an end portion of the crankcase 3b on the left side of the vehicle body to the rear wheel 7 via a chain, not illustrated. Further, according to the embodiment, as shown by Figs. 1 and 2, the engine 3 is covered by an engine cover 58 in a state of being mounted to the vehicle body frame 2.

The carburetor 25 is attached to an upper portion of the cylinder 3a via an intake pipe 61 and an exhaust pipe 62 is connected to a lower portion of the cylinder 3a. The intake pipe 61 is formed by being gradually inclined to deviate to the rear side of the vehicle body by progressing toward the upper side and is extended from the lower end opening portion of the middle portion 24 of the vehicle body frame 2 to an upper side of the cross member 26. The carburetor 25 connected to a rear end portion of the intake pipe 61 is arranged to the rear side of the cross member 26 and is connected with an air intake duct 64 of an air cleaner 63 provided at the vehicle body frame 2.

Among the bosses 51 through 53 at the three locations for attaching the engine 3 to the vehicle body frame 2, the front side boss 51 at a front end portion of the crankcase, is attached to the front side bracket 27 for supporting the engine extended from the cross member 26 to the lower side by the attaching bolts 54 and the upper side boss 52 and the lower side boss 53 at a rear end portion of the crankcase, are attached to the rear frame 16 of the vehicle body frame 2 via a rear side bracket 65 for supporting the engine . The rear side bracket 65 constitutes a bracket for supporting the engine.

Damper rubber 66 is interposed between the front side boss 51 and the attaching bolt 54 and between the upper side boss 52 and the attaching bolt 55 as shown by Fig. 9. Although Fig. 9 shows a portion of connecting the upper side boss 52 and the attaching bolt 55, a structure equivalent to a structure shown in Fig. 9 is also adopted at a portion of connecting the front side boss 51 and the attaching bolt 54. The other boss 53 is rigidly fixed to the rear side bracket 65 via the attaching bolt 56. By interposing the damper rubber 66 at two locations in three locations of attaching portions in this way, while solidly supporting the engine 3, vibration of the engine 3 transmitted to the vehicle body frame 2 can be reduced. Further, the structure for attaching the engine 3 to the vehicle body frame 2 can pertinently be changed other than the structure of the embodiment such that the bosses at the three locations are rigidly fixed to the vehicle body frame 2, the upper side boss 52 and the lower side boss 53 are elastically supported and the front side boss 51 is rigidly supported, the front side boss 51 and the lower side boss 53 are elastically supported and the upper side boss 51 is rigidly fixed, any one location of the bosses of the three locations is elastically supported and the other bosses are rigidly fixed, or all the bosses are elastically supported.

As shown by Fig. 3, the rear side brackets 65 for attaching the upper side boss 52 and the lower side boss 63, are formed in a plate-like shape and are fixed to the rear frame 16 of the vehicle body frame 2 by two pieces of fixing bolts 67 and 68 and the pivoting shaft 13. Various materials of steel, an aluminum alloy, a magnesium alloy, fiber-reinforced plastic and the like can be used for a material of forming the rear side bracket 65.

The rear frame 16 constitutes a portion of a rear end portion of the down frame 14 and as shown by Fig. 4 and Fig. 9, is formed in a shape opened to the upper side by side walls 16a and 16b at both ends in the vehicle width direction, a front wall 16c, a rear wall 16d and a bottom wall 16e. The opened portion on the upper side of the rear frame 16 is closed by the down frame 14 of the vehicle body frame 2 and therefore, as a result, the rear frame 16 is constituted by a closed sectional shape.

Further, the rear frame 16 is integrally formed with cylindrical bosses 69 and 70 extended from one end to other end in the vehicle width direction and the pivoting shaft 13 is supported by the cylindrical bosses 69 and 70.

The pivoting shaft 13 is integrally formed with a flange 13a on one end side and screwed with a nut 71 on other end side and is fastened to the rear frame 16 by the nut 71 in a state of interposing the rear side brackets 65 respectively between the flange 13a and the rear frame 16 and between the nut 71 and the rear frame 16. The left side arm 8a and the right side arm 8b of the rear arm 8 are pivotably supported by both ends of the pivoting shaft 13.

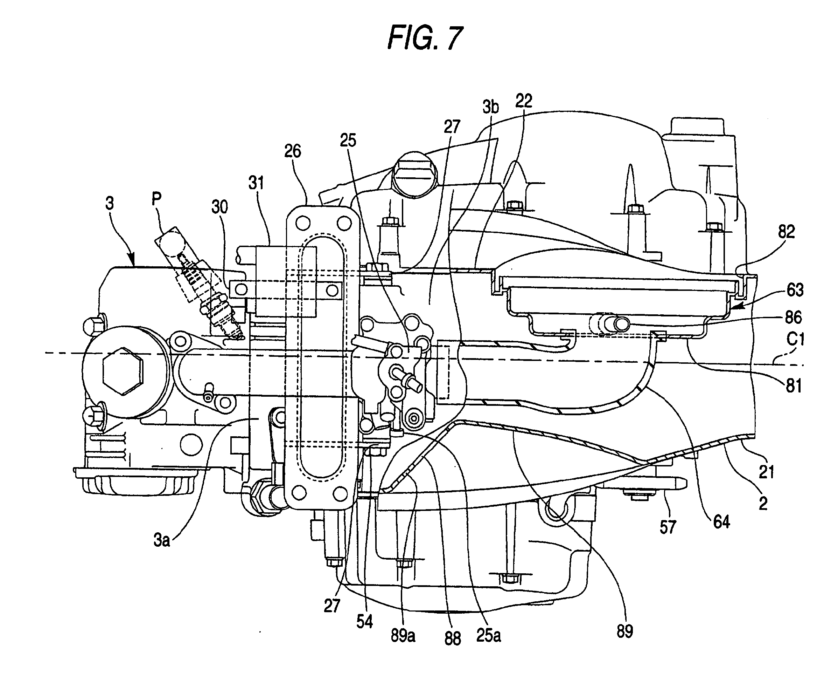

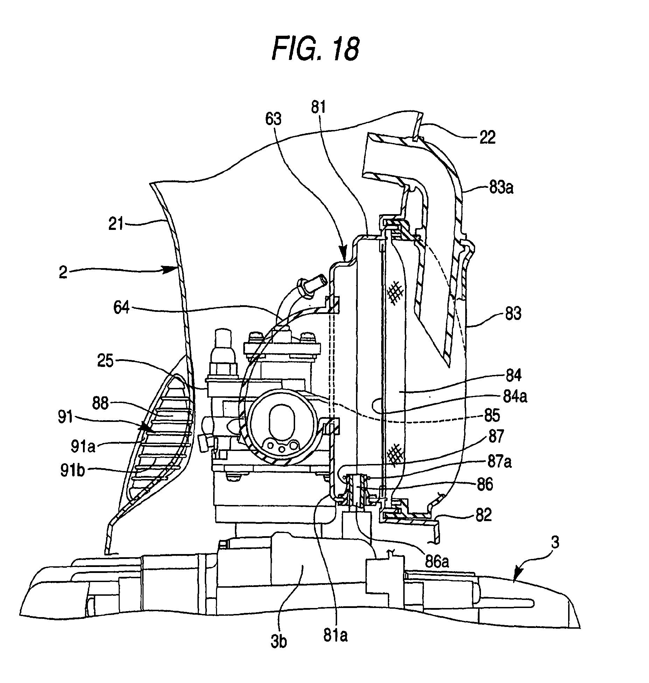

As shown by Fig. 7 and Fig. 18, the air cleaner 63 is constituted by an air cleaner case 81 integrally formed with the half portion 22 on the right side of the vehicle body of the vehicle body frame 2, a cover 83 for closing an attaching and detaching port 82 for an air cleaner element formed at the end portion on the right side of the vehicle body of the air cleaner case 81, an air cleaner element 84 mounted between the cover 83 and the air cleaner case 81 and a quenching net 84a arranged on an inner side of the air cleaner element 84.

The air cleaner case 81 is formed to partially recess a portion thereof in contact with the down frame 14 and the seat frame 15 at the half portion 12 on the right side of the vehicle body and formed in a shape of a bottomed cylinder such that the attaching and detaching port 82 for the air cleaner element is opened to the right side of the vehicle body. By perforating an intake flow out port 85 at an end portion of the air cleaner case 81 on the inner side of the vehicle body, the intake air duct 64 is connected.

Further, the air cleaner case 81 is arranged on the upper side of the crankcase 3b of the engine 3 and is connected with a pipe 86 for leading out blowby gas. The pipe 86 is erected at the crankcase 3b to direct to the upper direction and an upper end portion 86a thereof is inserted from the lower side to a pipe connecting coupler 87 of a lower end portion 81a of the air cleaner case 81. The coupler 81 is connected to the pipe 86 by a clip 87a and adopts a structure of preventing blowby gas from leaking from the pipe connecting portion.

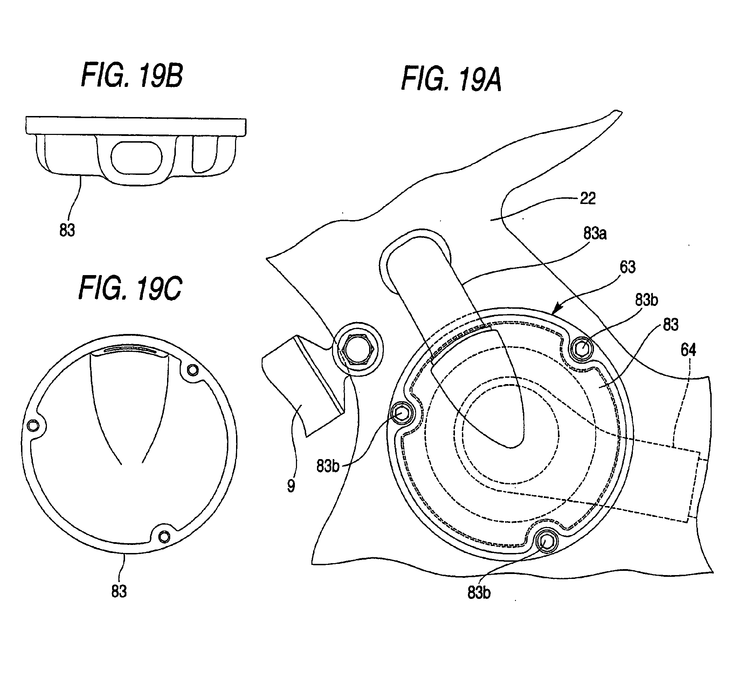

The cover 83 is attached with an air introducing duct 83a at an upper portion thereof as shown by Fig. 18 and is fixed to the half portion 22 on the right side of the vehicle body of the vehicle frame 2 by three pieces of fixing bolts 83b as shown by Figs. 19A through 19C. According to the air introducing duct 83a, an upper end portion thereof is made to face inside of the vehicle body frame 2 and a lower end portion thereof is made to face inside of the cover 83. That is, in the air cleaner 63 according to the embodiment, air at inside of the vehicle body frame 2 is made to flow in by passing the air introducing duct 83b. The cover 83 constitutes a lid member of the air cleaner.

The carburetor 25 connected to a downstream side end portion of the intake air duct 64, is arranged to shift to the left side of the vehicle body from a center line C1 (refer to Fig. 7) in the vehicle width direction of the motorcycle 1. That is, according to the motorcycle 1, the air cleaner case 81 and the carburetor 15 are arranged to distribute to one side and other side in the vehicle width direction. The center line in the vehicle width direction of the motorcycle 1 is indicated by a one-dotted chain line C1 in Fig. 7.

The left side half portion 21 of the vehicle body frame 2 covering the carburetor 25 from the left side of the vehicle body, is formed with a draft hole 88 at a portion thereof in correspondence with the portion of connecting the carburetor 25 and the intake air duct 64. The draft hole 88 is formed at a front wall 89a formed by partially recessing the half portion 21 on the left side of the vehicle body to the inner side of the vehicle body to thereby communicate inside and outside of the left side half portion 21. Further, as shown by Fig. 4, the draft hole 88 is set with an opening range such that an adjusting screw 25a of the carburetor 25 is exposed.

According to the recessed portion 89, as shown by Fig. 7, a portion thereof disposed mostly on the inner side of the vehicle body, is formed to be proximate to the intake air duct 64 and the front wall 89a of the recessed portion 89 is formed to gradually incline to extend to the inner side of the vehicle body by progressing to the rear side of the vehicle body. Therefore, the draft hole 88 is opened in a skewed rear direction. By forming the draft hole 88 and the recessed portion 89 in this way, running wind flowing at inside of the down frame 14 is exhausted from the draft hole 88 to outside of the frame by passing an interval between the carburetor 25 and the half portion 21 on the left side of the vehicle body. The running wind flows from a slit 58a for introducing running wind (refer to Fig. 2) formed at a front face of the engine cover 58 into the engine cover 58 and flows in from the lower end opening portion of the middle portion 24 of the down frame 14 into the down frame 14.

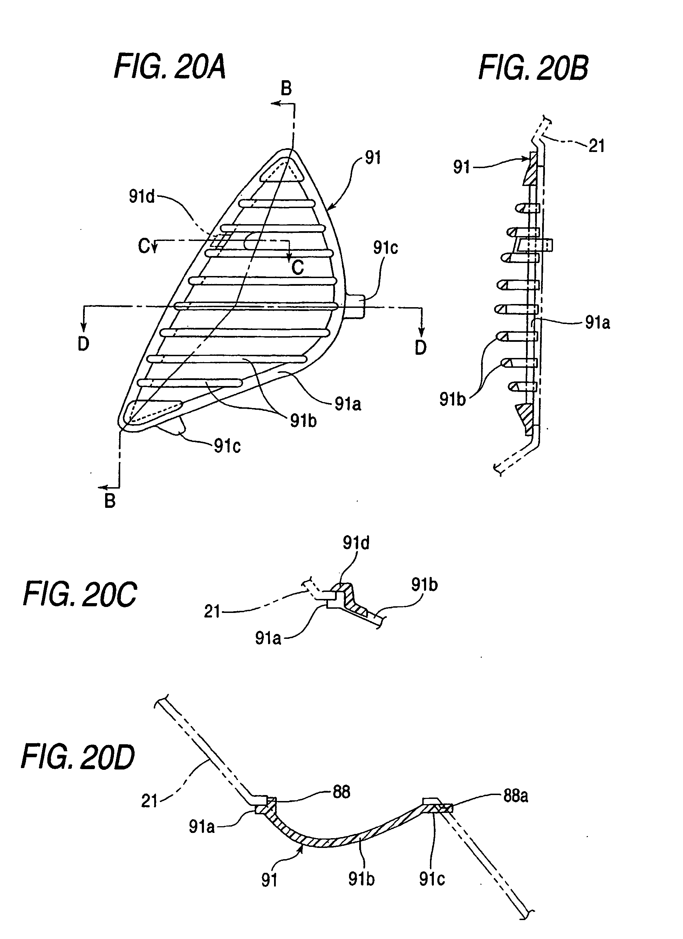

What is designated by notation 91 provided to the cover the draft hole 88 to close there, is a cover for preventing a foreign matter from entering the inner portion. As shown by Figs. 20A through 20D, the cover 91 is constituted by a frame 91a formed in a shape equivalent to an opening shape of the draft hole 88 and a number of bars 91b horizontally bridged to the frame 91a. The frame 91a is projected with projections 91c at a rear end portion and a lower end portion thereof and is projected with a hook 91d (refer to Fig. 20C) at a front portion thereof. The cover 91 is attachably and detachably attached to the draft hole 88 by engaging the projection 91c to a horizontal hole 88a of the draft hole 88 as shown by Fig. 20D and engaging the hook 91d to an opening edge of the draft hole 88 as shown by Fig. 20C.

In order to attach the above-described engine 3 to the vehicle body frame 2, as shown by Fig. 8 and Fig. 13, the operation is firstly carried out by attaching the fuel tank 11 to the down frame 14. In attaching the fuel tank 11 to the vehicle body frame 2, the rear endportion of the fuel tank 11 is previously attached with the bracket 32 for supporting the fuel tank 11 and the cylindrical member 39 at the front end portion of the fuel tank is fixed to the front portion of the down frame by the above-described fastening structure. Next, the bracket 32 is fixed to the down frame 14 along with the fuel cock 36 by the fixing bolts 33. A fuel hose (not illustrated) for connecting the fuel cock 36 and the fuel tank 11 is previously attached prior to inserting the fuel tank 11 into the down frame 14.

In attaching the engine 3 to the vehicle body frame 2, first, the front side bracket 27 is attached to the front side boss 51 of the front end portion of the crankcase by the attaching bolt 54 and the cross member 26 is tacked to the front side bracket 27. The engine 3 is previously attached with the intake pipe 61 and the carburetor 25. Further, connection of the carburetor 25 and the intake air duct 64 is carried out by inserting the hand from an opening, not illustrated, (the draft hole 88) on the side of the seat frame 15 into the vehicle body frame 2 after attaching the engine.

Next, the front side bracket 27, the cross member 26, the carburetor 25 and the like are inserted from the lower end opening portion of the middle portion 24 of the vehicle body frame 2 into the vehicle body frame 2 and the upper side boss 52 and the lower side boss 53 of the rear end portion of the engine are tackedly held by the rear side bracket 65 by the attaching bolts 55 and 56.

In a state in which the engine 3 is tackedly held by the vehicle body frame 2 in this way, the front side bracket 27 and the cross member 26 are fixed to the down frame 14 by the attaching bolt 28. Further, by fastening the upper side boss 52 and the lower side boss 53 to the rear side bracket 65 by the attaching bolts 55 and 56 by regular fastening force, the operation of attaching the engine is finished.

Further, by attaching the engine 3 from the lower side to the vehicle body frame 2 as described above, the pipe 86 for leading out blowby gas of the crankcase 3b is connected to the coupler 87 of the air cleaner case 81.

According to the dies for molding the half portion 21 on the left side of the vehicle body and the half portion 22 on the right side of the vehicle body of the vehicle body frame 2 constituted as described above, the cavity can be formed in a simple shape by the recessed portion and the projected portion and therefore, the structure becomes simpler than a structure of separating the dies in the up and down direction. Further, the vehicle body frame 2 can be molded in the closed sectional shape over a wide range and therefore, the rigidity becomes higher than that of a vehicle body frame molded by the dies separated in the up and down direction.

Further, according to the friction agitation bonding process used for bonding the half portion 21 on the left side of the vehicle body and the half portion 22 on the right side of the vehicle body of the vehicle body frame 2, strain of a product after bonding is smaller than that by other welding process and therefore, correcting operation after bonding may be dispensed with or only simple correcting operation may be carried out after bonding. Therefore, a number of steps in fabricating the vehicle body frame 2 is reduced and a reduction in cost can be achieved.

Further, according to the embodiment, the front portion of the engine 3 is supported by the cross member 26 horizontally bridged to the lower end opening portion of the down frame 14 and therefore, not only the lower end opening portion can be reinforced by the cross member 26 but also the front portion of the engine 3 can solidly be supported by the two left and right half portions 21 and 22 by the cross member 26. Furthermore, the ignition coil 31 is arranged above the cross member 26 and therefore, it can be prevented by the cross member 26 that water splashed up by the front wheel 4 and invading from the lower end opening portion of the down frame 14 into the vehicle body frame 2, is splashed to the ignition coil 31.

In addition thereto, the rear side bracket 65 in the plate-like shape is interposed between the rear end portion of the engine and the vehicle body frame 2 in a state of being erected and therefore, the rear side bracket 65 functions as an elastic member, the rigidity in the direction of operating reaction force in driving the rear wheel 7 by the engine 3 (front and rear direction of vehicle body) can be promoted and transmission of vibration of the engine in the vehicle width direction to the vehicle body frame 2 can be reduced.

According to the motorcycle 1 constituted as described above, the down frame 14 extended from the head pipe 12 in the rear downward direction, is formed in the closed sectional shape, the rear end portion of the down frame 14 is opened to the lower side, the fuel tank 11 is contained into the down frame 14 by constituting the opening as a port for putting in and out the fuel tank 11 and therefore, the surrounding of the fuel tank 11 can be covered by the down frame 14. Therefore, the fuel tank 11 is not exerted with external force and therefore, as shown by the embodiment, the fuel tank 11 can be formed by synthetic resin to relatively lower the strength.

Further, according to the motorcycle 1, the front end portion of the fuel tank 11 is projected with the cylindrical member 39 to direct to the upper side, the cylindrical member 39 is fixed by being inserted to the supporting cylinder 42 of the down frame 14, the rear end portion of the fuel tank 11 is supported by the bracket 32 horizontally bridged to the opening at the rear end portion of the down frame 14 and therefore, the front end portion of the fuel tank can be attached to the down frame 14 by utilizing the cylindrical member 39 of the fuel tank 11. Further, the rear end portion of the down frame 14 can be reinforced by the bracket 32 for supporting the rear end portion of the fuel tank 11.

The air cleaner 63 can be assembled by mounting the air cleaner element 84 to the attaching and detaching port 82 for the air cleaner element of the air cleaner case 81 from outside of the vehicle body and attaching the cover 83. The air cleaner case 81 is integrally formed with the half portion 22 on the right side of the vehicle body of the vehicle body frame 2 and therefore, in comparison with the case of forming a member used exclusively as an air cleaner case separately from the vehicle body frame 2, the air cleaner case 81 having the large capacity can be formed by widely utilizing the space at inside of the vehicle body frame 2. Further, a member of a bracket or the like for fixing the air cleaner case 81 to the vehicle body frame 2 is dispensed with.

Further, according to the motorcycle 1, the air cleaner case 81 is formed above the crankcase 3b of the engine 3, the upper end portion of the pipe 86 for leading out blowby gas projected at the crankcase 3b, is connected to the lower end portion of the air cleaner case 81 and therefore, not only the pipe 86 for leading out blowby gas can be formed to be short but also a member for supporting the pipe 86 is dispensed with. Therefore, a space occupied by a member used for leading blowby gas to the air cleaner 63 can be narrowed and the air cleaner case 81 can be formed to be large by that amount.

According to the vehicle body frame 2 constituted as described above, two portions of the rear end portion of the engine are supported by the rear frame 16 formed in the closed sectional shape and having relatively high rigidity, and therefore, the middle portion 24 having relatively low rigidity since the lower opening portion is formed, is reinforced by the cross member 26, the front portion of the engine 3 is supported thereby and therefore, load by mounting the engine 3 can be applied similarly to the rear end portion of the down frame 14 (rear frame 16) and the middle portion 24.

Further, according to the vehicle body frame 2, the rear side bracket 65 can be made to function as an elastic member and vibration or impact transmitted from the rear end portion of the engine to the vehicle body frame 2 can be reduced. According to the embodiment, the rear side bracket 65 in the plate-like shape is interposed between the rear end portion of the engine and the vehicle body frame 2 in the state of being erected and therefore, the rigidity in a direction of operating reaction force in driving the rear wheel 7 by the engine 3 (front and rear direction of vehicle body) can be promoted and transmission of vibration of the engine in the vehicle width direction to the vehicle body frame 2 can be reduced.

Further, according to the vehicle body frame 2, the damper rubber 66 is interposed between the upper side boss 52 at the rear end portion of the engine and the attaching bolt 55 and therefore, vibration of the engine 3 transmitted to the vehicle body frame 2 can be reduced by the damper rubber 66.

Furthermore, according to the vehicle body frame 2, by arranging the ignition coil 31 above the cross member 26, the coil 31 can be disposed at a vicinity of the ignition plug P.

According to the motorcycle 1 constituted in this way, the carburetor 25 and the air cleaner 63 are arranged to distribute to one side and other side in the vehicle width direction, and arranged to align in the front and rear direction by disposing the carburetor 25 at the front side of the vehicle body, the draft hole 88 opened in the skewed rear direction is formed at the portion in correspondence with the portion of connecting the carburetor 25 and the intake air duct 64 at the side wall of the vehicle body frame 2 proximate to the carburetor 25 and therefore, a path of running wind constituting the outlet by the draft hole 88 is formed at inside of the vehicle body frame 2 and in running, running wind is made to flow at inside of the vehicle body frame 2.

According to the running wind, since the draft port 88 is formed at one end side in the vehicle width direction (end portion on left side of vehicle body) and other end side is blocked by the intake air duct 64 and the air cleaner 63, a flow rate thereof is relatively increased at one end portion in the vehicle width direction formed with the draft hole 88. The carburetor 25 is disposed at the portion of increasing the flow rate and therefore, the carburetor 25 can efficiently be cooled by the running wind.

Further, the operation of connecting the intake air duct 64 to the carburetor 25 can be carried out from the draft hole 88 and therefore, an opening formed at the vehicle body frame 2 can be reduced in comparison with a case of forming an opening exclusively for carrying out the operation.

Further, for bonding the half portion 21 on the left side of the vehicle body and the half portion 22 on the right side of the vehicle body frame 2, the bonding operation is not particularly carried out by the friction agitation bonding process and therefore, the operation can be carried out by, for example, brazing, so far as solid phase bonding is carried out, any process may be used and so far as the frame is not melted. In case of brazing, a brazing material is coated at a bonded portion in a state of combining the two half portions 21 and 22 and bonding is carried out by melting the brazing material by a heating furnace.

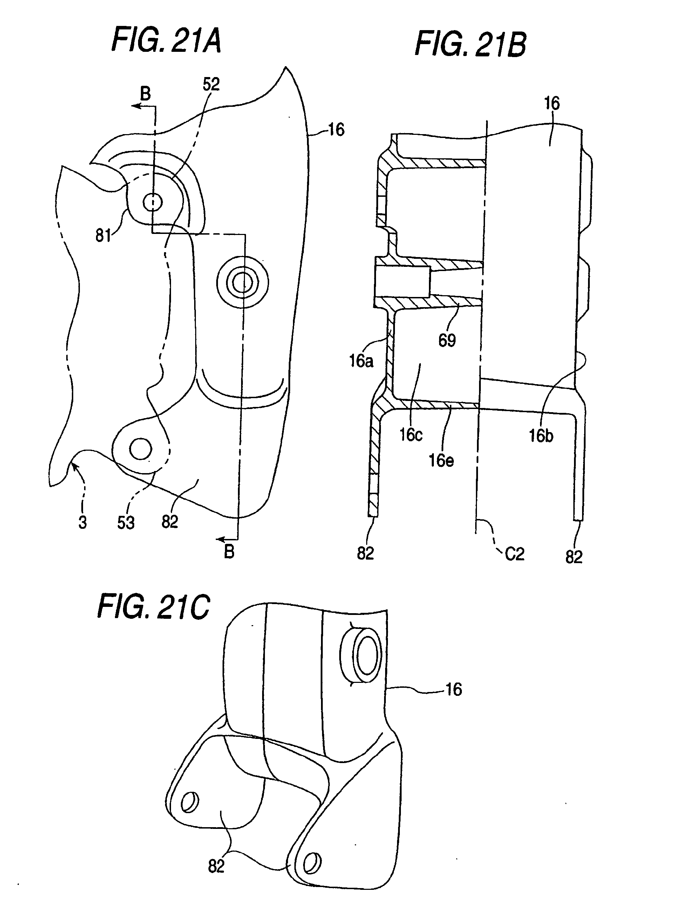

For attaching the rear end portion of the engine to the vehicle body frame 2, other than using the rear side bracket 65 as described above, as shown by Fig. 21A through 21C, the rear frame 16 may integrally be formed with a bracket portion.

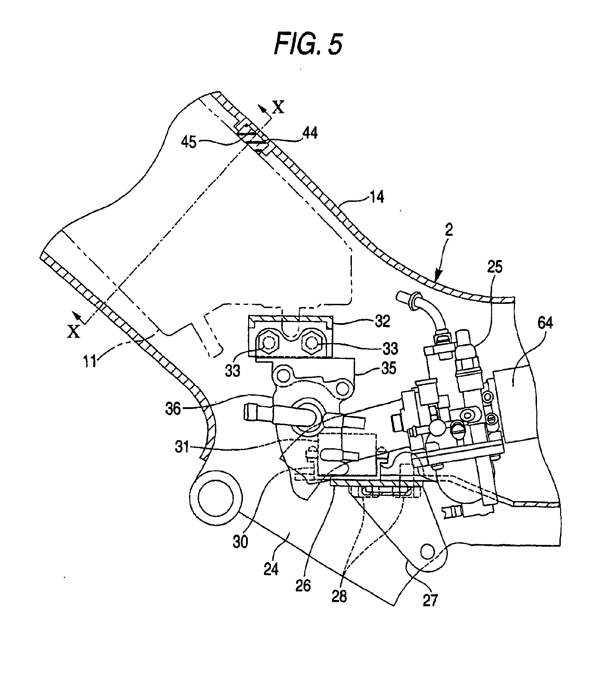

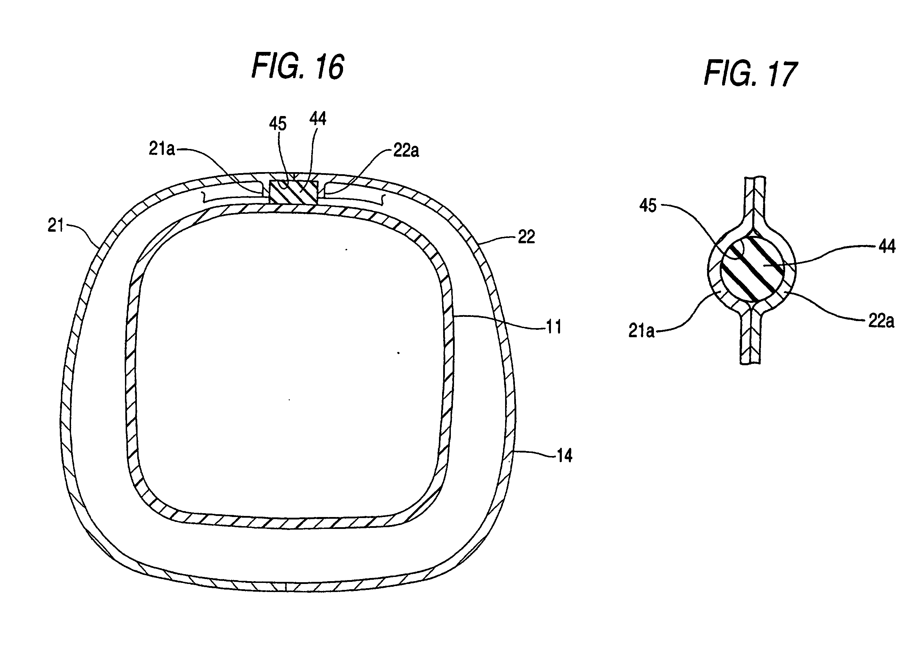

Figs. 21A through 21C are views for showing other embodiment of the vehicle body frame, Fig. 21A is a side view of the rear frame portion, Fig. 21B is a view showing a state of viewing the rear frame portion from the rear side of the vehicle body and the drawing is illustrated in a state of breaking a left side from a center line C2 in the vehicle width direction. A breaking position of Fig. 21B is indicated by a line B-B in Fig. 21A. Fig. 21C is a perspective view of a lower end portion of the rear frame. In these drawings, members the same as or equivalent to those explained in reference to Fig. 1 through Fig. 20C, described above, are attached with the same notations and a detailed explanation thereof will pertinently be omitted.

The rear frame 16 shown in Figs. 20A through 20C, is integrally formed with an upper side attaching plate 81 for attaching the upper side boss 52 of the rear end portion of the engine and a lower side attaching plate 82 for attaching the lower side boss 53 at both end portions thereof in the vehicle width direction. The attaching plates 81 and 82 are projected to outer sides in the vehicle width direction from a main portion of the rear frame 16 formed in the closed sectional shape. Further, although not illustrated, a supporting system between the upper side boss 52 and the upper side attaching plate 81, is interposed with damper rubber equivalent to that in the case of adopting the above-described embodiment.

By adopting the constitution of directly attaching the rear end portion of the engine to the rear frame 16 in this way, a further reduction in cost can be achieved by reducing a number of parts and a number of assembling steps.

As explained above, according to the invention, with regard to the dies for molding the half portion on the left side of the vehicle body and the half portion on the right side of the vehicle body, the cavity can be formed in the simple shape by the recessed portion and the projected portion and the structure becomes simpler than that by a constitution of separating the dies in the up and down direction. Further, the vehicle body frame for a motorcycle according to the invention, can be formed in the closed sectional shape over an entire region of the forming range and therefore, promotion in the rigidity can be achieved.

Therefore, there can be provided a motorcycle having high rigidity and low fabrication cost and a vehicle body frame thereof.

Further, according to the invention, in comparison with a case of solidly forming two half portions, light-weighted formation can be achieved.

Further, the bearing for the steering shaft can be press-fitted to and held by the ring-like member, load in press-fitting the bearing is not applied to the two half portions and therefore, the solid vehicle body frame can be formed.

Further, by using the solid phase bonding process, incomparisonwithotherweldingprocess, strain of a product after bonding is reduced and therefore, correcting operation after bonding is dispensed with or only simple correcting operation may be carried out after bonding. Therefore, according to the vehicle body frame for a motorcycle of the invention, a further reduction in cost can be achieved by reducing operation which is carried out after bonding.

Further, as explained above, according to the invention, the surrounding of the fuel tank is covered by the down frame, the fuel tank is not exerted with external force and therefore, the fuel tank can be formed to relatively lower the strength. Therefore, even when the fuel tank is formed by, for example, synthetic resin or formed by a metal, the thickness can be formed to be thin and light-weighted formation of the fuel tank can be achieved.

Further, the front portion of the fuel tank can be attached to the down frame by utilizing the cylindrical member of the fuel tank and therefore, a member for exclusively connecting the front portion of the fuel tank to the down frame is dispensed with. Further, the rear end portion of the down frame can be reinforced by the bracket for supporting the rear end portion of the fuel tank and therefore, the rear end portion of the fuel tank can be supported and the down frame can be reinforced by the same member.

Therefore, both of the portions for supporting the front portion and the portion for supporting the rear portion of the fuel tank can be supported by a member having a plurality of functions (cylindrical member and the bracket) and therefore, not only light-weighted formation can be achieved by reducing a number of parts but also fabrication cost can be reduced.

Further, as has been explained above, according to the invention, the air cleaner case can be formed by widely utilizing the space at inside of the vehicle body frame, further, a member such as a bracket for fixing the air cleaner case to the vehicle body frame is dispensed with and therefore, a large-sized air cleaner having a large capacity can be provided in the vehicle body frame.

Further, the space occupied by the member used for leading blowby gas to the air cleaner can be narrowed, the air cleaner case can be formed to be large by that amount and therefore, the air cleaner having a further large capacity can be formed.

Further, as explained above, according to the invention, the two portions of the rear end portion of the engine are supported by the rear end portion of the down frame having the relatively high rigidity, the middle portion having the relatively low rigidity is reinforced by the cross member, the front portion of the engine is supported thereby and therefore, load by mounting the engine is similarly applied to the rear end portion of the down frame and the middle portion.

Therefore, the engine can be supported with excellent balance by the down frame formed by bonding the two left and right half portions and therefore, according to the vehicle body frame for a motorcycle of the invention, while achieving light-weighted formation by molding the two left and right half portions by casting, the rigidity can be promoted.

Further, bymaking the bracket for supporting the engine function as the elastic member having the rigidity lower than that of the frame having the closed sectional shape, vibration transmitted from the rear end portion of the engine to the vehicle body frame and impact by drive force of the engine can be reduced. Therefore, in molding the two left and right half portions of the vehicle body frame by casting, the thickness can be made to be thinner and further light-weighted formation can be achieved.

Further, vibration of the engine transmitted to the vehicle body frame can be reduced by the elastic member. Therefore, regardless of promoting supporting rigidity by connecting two portions of the rear end portion of the engine to the vehicle body frame, the vehicle body frame for a motorcycle which does not give unpleasant feeling to a rider can be realized.

Further, as explained above, there is constructed the constitution in which a large amount of running wind is made to flow at the surrounding of the carburetor and therefore, while forming the draft hole in order to achieve to promote the rigidity of the vehicle body frame, the carburetor can efficiently be cooled by running wind. Furthermore, operation of connecting the intake air duct to the carburetor can be carried out from the draft hole and therefore, in comparison with the case of forming an opening for exclusively carrying out the operation, further promotion of the rigidity of the vehicle body frame can be achieved.

Further, maintenance of the carburetor can be carried out from the draft hole and therefore, in comparison with the case of forming a hole for carrying out the maintenance, rigidity of the vehicle body frame can be promoted.

Further, casting includes a die casting process. Further, similar to JP-A-2000-280962 and JP-A-2000-233782, described above, the opening portion of the rear end portion of the down frame substantially in the inverse-U-like shape may be covered by a cover member constituting the engine. Further, the opening portion substantially in the inverse-U-like shape of the rear end port ion of the down frame may be covered by a cover member separate from the engine. Further, similar to JP-A-59-077991, the upper portion of the seat frame may be extended to the rear side of the vehicle body to cover an upper side of a tire.

## Claims

1. A motorcycle having a vehicle body frame (2) molded by casting, wherein said vehicle body frame (2) comprises:
a half portion (21) on a left side of the vehicle body and a half portion (22) on a right side of the vehicle body, each of the half portions (21, 22) including:
a down frame (14) extended downwardly from a head pipe (12) toward a rear of a vehicle body; and
a seat frame (15) extended from a rear end portion of the down frame (14) toward an upper side of the vehicle body, the down frame (14) and the seat frame (15) being integrally molded with each other,
wherein when the vehicle body frame (2) is formed by bonding together the half portion (21) on the left side of the vehicle body and the half portion (22) on the right side of the vehicle body, at least a portion of the down frame (14) in a vicinity of the head pipe (12) cooperatively forms a portion having a closed section, and wherein said vehicle body frame (2) defines:
an opening portion (24a) opened to a lower side of the vehicle body and formed at the rear end portion of the down frame (14); and
a hollow portion (23) formed at least at a portion of the portion having the closed section, the hollow portion (23) being communicated to an inner space of the opening portion (24a), **characterized that** said vehicle body frame (2) further comprises a cross member (26) provided at the opening portion (24a), for connecting the half portion (21) on the left side of the vehicle body and the half portion (22) on the right side of the vehicle body to horizontally bridge, and wherein a front side bracket (27) for supporting the front portion of the engine is attached by a bolt (28) for attaching the cross member (26).

2. Motorcycle according to claim 1, **characterized in that** it further comprises a fuel tank (11) arranged within the down frame (14), wherein at least a portion of the fuel tank (11) is arranged at the hollow portion (23).

3. Motorcycle according to claim 1 or 2, **characterized in that** said vehicle body frame (2) defines an opening portion (24a) opened to a lower side of the vehicle body and formed at the rear end portion of the down frame (14), **in that**
the down frame (14) disposed at a further front portion of the vehicle body than the opening portion and the seat frame (15) are constituted by portions having closed sections, and **in that** the vehicle body frame (2) further comprises a portion of an air cleaner case formed at least at the portions having the closed sections.

4. Motorcycle according to claim 1, **characterized in that** said vehicle body frame (2) defines an opening portion (24a) opened to a lower side of the vehicle body and formed at the rear end portion of the down frame (14), **in that** the down frame (14) disposed at a further front portion of the vehicle body than the opening portion and the seat frame (15) are constituted by portions having closed sections, and **in that** the vehicle body frame (2) further comprises an engine attaching portion formed at least at the portions having the closed sections.

5. Motorcycle according to claim 4, **characterized in that** said vehicle body frame (2) defines an opening portion (24a) opened to a lower side of the vehicle body and formed at the rear end portion of the down frame (14), **in that** the vehicle body frame (2) further comprises a cross member (26) provided at the opening portion, for connecting the half portion (21) on the left side of the vehicle body and the half portion (22) on the right side of the vehicle body, and **in that** a portion having a closed section is formed by the half portion (21) on the left side of the vehicle body, the half portion (22) on the right side of the vehicle body and the cross member (26), and a portion for attaching an engine is formed at the portion having the closed section formed by the half portion (21) on the left side of the vehicle body, the half portion (22) on the right side of the vehicle body and the cross member (26).

6. Motorcycle according to claim 5, **characterized in that** the down frame (14) defining the opening portion further defines another opening portion defined remote from the portion having the closed section formed by the half portion (21) on the left side of the vehicle body, the half portion (22) on the right side of the vehicle body and the cross member (26) in a front and rear direction of the vehicle body.

## Patentansprüche

1. Motorrad mit einem gießgeformten Fahrzeugaufbaurahmen (2), wobei der Fahrzeugaufbaurahmen (2) folgendes umfaßt:
einen Halbabschnitt (21) auf der linken Seite des Fahrzeugaufbaus und einen Halbabschnitt (22) auf der rechten Seite des Fahrzeugaufbaus, wobei jeder der Halbabschnitte (21, 22) folgendes umfaßt:
einen Unterrahmen (14), der sich von einem Kopfrohr (12) in Richtung auf eine Rückseite des Fahrzeugaufbaus nach unten erstreckt, und
einen Sitzrahmen (15), der sich von einem rückwärtigen Endabschnitt des Unterrahmens (14) in Richtung auf eine obere Seite des Fahrzeugaufbaus erstreckt, wobei der Unterrahmen (14) und der Sitzrahmen (15) einstückig miteinander geformt sind,
wobei dann, wenn der Fahrzeugaufbaurahmen (2) durch das Verbinden des Halbabschnitts (21) auf der linken Seite des Fahrzeugaufbaus und des Halbabschnitts (22) auf der rechten Seite des Fahrzeugaufbaus miteinander ausgebildet ist, zumindest ein Abschnitt des Unterrahmens (14) in der Nähe des Kopfrohres (12) mitwirkend einen Abschnitt mit einem geschlossenen Teil bildet, und wobei der Fahrzeugaufbaurahmen (2) folgendes bildet:
einen Öffnungsabschnitt (24a), der zu einer unteren Seite des Fahrzeugaufbaus geöffnet und an dem hinteren Endabschnitt des Unterrahmens (14) ausgebildet ist, und
einen hohlen Abschnitt (23), der zumindest an einem Bereich des Abschnitts mit dem geschlossenen Teil ausgebildet ist, wobei der hohle Abschnitt (23) mit einem Innenraum des Öffnungsabschnitts (24a) verbunden ist,
**dadurch gekennzeichnet, daß** der Fahrzeugaufbaurahmen (2) außerdem ein quer verlaufendes Glied (26) umfaßt, das an dem Öffnungsabschnitt (24a) vorgesehen ist, um den Halbabschnitt (21) auf der linken Seite des Fahrzeugaufbaus und den Halbabschnitt (22) auf der rechten Seite des Fahrzeugaufbaus als horizontales Brückenelement zu verbinden, und
wobei eine vordere, seitliche Winkelstütze (27) zum Tragen des vorderen Abschnitts des Motors mit einer Schraube (28) zum Befestigen des quer verlaufenden Glieds (26) befestigt ist.

2. Motorrad nach Anspruch 1, **dadurch gekennzeichnet, daß** dieses außerdem einen Kraftstofftank (11) umfaßt, der in dem Unterrahmen (14) angeordnet ist, wobei zumindest ein Abschnitt des Kraftstofftanks (11) an dem hohlen Abschnitt (23) angeordnet ist.

3. Motorrad nach Anspruch 1 oder 2, **dadurch gekennzeichnet, daß** der Fahrzeugaufbaurahmen (2) einen Öffnungsabschnitt (24a) bildet, der zu einer unteren Seite des Fahrzeugaufbaus geöffnet und an dem hinteren Endabschnitt des nach unten erstreckten Rahmens (14) ausgebildet ist, daß
der Unterrahmen (14), der an einem weiter vorn liegenden Abschnitt als dem Öffnungsabschnitt des Fahrzeugaufbaus angeordnet ist, und der Sitzrahmen (15) von Abschnitten mit geschlossenen Teilen gebildet werden, und
daß der Fahrzeugaufbaurahmen (2) ferner einen Abschnitt eines Luftfiltergehäuses umfaßt, das zumindest an den Abschnitten mit den geschlossenen Teilen ausgebildet ist.

4. Motorrad nach Anspruch 1, **dadurch gekennzeichnet, daß** der Fahrzeugaufbaurahmen (2) einen Öffnungsabschnitt (24a) bildet, der zu einer unteren Seite des Fahrzeugaufbaus geöffnet und an dem hinteren Endabschnitt des Unterrahmens (14) ausgebildet ist, daß der Unterrahmen (14), der an einem weiter vorn liegenden Abschnitt als dem Öffnungsabschnitt des Fahrzeugaufbaus angeordnet ist, und der Sitzrahmen (15) von Abschnitten mit geschlossenen Teilen gebildet werden, und daß der Fahrzeugaufbaurahmen (2) ferner einen Motorbefestigungsabschnitt umfaßt, der zumindest an den Abschnitten mit den geschlossenen Teilen ausgebildet ist.

5. Motorrad nach Anspruch 4, **dadurch gekennzeichnet, daß** der Fahrzeugaufbaurahmen (2) einen Öffnungsabschnitt (24a) bildet, der zu einer unteren Seite des Fahrzeugaufbaus geöffnet und an dem hinteren Endabschnitt des Unterrahmens (14) ausgebildet ist, daß der Fahrzeugaufbaurahmen (2) außerdem ein quer verlaufendes Glied (26) umfaßt, das an dem Öffnungsabschnitt (24a) vorgesehen ist, um den Halbabschnitt (21) auf der linken Seite des Fahrzeugaufbaus und den Halbabschnitt (22) auf der rechten Seite des Fahrzeugaufbaus zu verbinden, und daß ein Abschnitt mit einem geschlossenen Teil von dem Halbabschnitt (21) auf der linken Seite des Fahrzeugaufbaus, dem Halbabschnitt (22) auf der rechten Seite des Fahrzeugaufbaus und dem quer verlaufenden Glied (26) gebildet ist und ein Abschnitt zum Befestigen eines Motors an dem Abschnitt mit dem geschlossenen Teil gebildet ist, der von dem Halbabschnitt (21) auf der linken Seite des Fahrzeugaufbaus und dem Halbabschnitt (22) auf der rechten Seite des Fahrzeugaufbaus und dem quer verlaufenden Glied (26) gebildet ist.

6. Motorrad nach Anspruch 5, **dadurch gekennzeichnet, daß** der Unterrahmen (14), der den Öffnungsabschnitt bildet, außerdem einen weiteren Öffnungsabschnitt bildet, der von dem Abschnitt mit dem geschlossenen Teil entfernt liegt, der von dem Halbabschnitt (21) auf der linken Seite des Fahrzeugaufbaus, dem Halbabschnitt (22) auf der rechten Seite des Fahrzeugaufbaus und dem quer verlaufenden Glied (26) in Richtung nach vorn und nach hinten an dem Fahrzeugaufbau gebildet ist.

## Revendications

1. Motocyclette comprenant un châssis de corps de véhicule (2) moulé par coulée, dans laquelle ledit châssis de corps de véhicule (2) comprend :
une demi-portion (21) sur un côté gauche du corps de véhicule et une demi-portion (22) sur un côté droit du corps de véhicule, chacune des demi-portions (21, 22) incluant :
un élément de châssis descendant (14) qui s'étend vers le bas depuis un tube antérieur (12) vers l'arrière du corps de véhicule ;
un élément de châssis de siège (15) qui s'étend depuis une portion à l'extrémité postérieure de l'élément de châssis descendant (14) en direction d'un côté supérieur du corps de véhicule, l'élément de châssis descendant (14) et l'élément de châssis de siège (15) étant moulés intégralement l'un avec l'autre,
dans laquelle quand le châssis de corps de véhicule (2) est formé en joignant ensemble la demi-portion (21) sur le côté gauche du corps de véhicule et la demi-portion (22) sur le côté droit du corps de véhicule, au moins une portion de l'élément de châssis descendant (14) au voisinage du tube antérieur (12) forme en coopération une portion ayant une section fermée, et dans laquelle ledit châssis de corps de véhicule (2) définit :
une portion ouverte (24a), ouverte vers un côté inférieur du corps de véhicule et formée au niveau de la portion à l'extrémité arrière de l'élément de châssis descendant (14) ; et
une portion creuse (23) formée au moins au niveau d'une partie de la portion ayant une section fermée, la portion creuse (23) communiquant avec un espace intérieur de la portion ouverte (24a),
**caractérisée en ce que** ledit châssis de corps de véhicule (2) comprend encore un élément transversal (26) prévu au niveau de la portion ouverte (24a) pour relier la demi-portion (21) sur le côté gauche du corps de véhicule et la demi-portion (22) sur le côté droit du corps de véhicule pour former un pontet horizontal, et dans laquelle une platine latérale frontale (27) pour supporter la portion frontale du moteur est attachée par un boulon (28) pour attacher l'élément transversal (26).

2. Motocyclette selon la revendication 1, **caractérisée en ce qu'**elle comprend encore un réservoir à carburant (11) agencé dans l'élément de châssis descendant (14), de sorte qu'au moins une portion du réservoir à carburant (11) et agencée dans la portion creuse (23).

3. Motocyclette selon la revendication 1 ou 2, **caractérisée en ce que** ledit châssis de corps de véhicule (2) définit une portion ouverte (24a), ouverte vers un côté inférieur du corps de véhicule et formée à la portion à l'extrémité arrière de l'élément de châssis descendant (14),
**en ce que** l'élément de châssis descendant (14), disposé au niveau d'une portion du corps de véhicule qui se trouve plus loin à l'avant que la portion ouverte, et l'élément de châssis de siège (15) sont constitués par des portions présentant des sections fermées, et **en ce que** le châssis de corps de véhicule (2) comprend encore une portion d'un boîtier de filtre à air formé au moins au niveau des portions présentant les sections fermées.

4. Motocyclette selon la revendication 1, **caractérisée en ce que** ledit châssis de corps de véhicule (2) définit une portion ouverte (24a), ouverte vers un côté inférieur du corps de véhicule et formée au niveau de la portion à l'extrémité arrière de l'élément de châssis descendant (14), **en ce que** l'élément de châssis descendant (14), disposé au niveau d'une portion du corps de véhicule qui se trouve plus loin à l'avant du corps de véhicule que la portion ouverte, et l'élément de châssis de siège (15) sont constitués par des portions ayant des sections fermées, et **en ce que** le châssis de corps de véhicule (2) comprend encore une portion de fixation pour le moteur, formée au moins au niveau des portions ayant les sections fermées.

5. Motocyclette selon la revendication 4, **caractérisée en ce que** ledit châssis de corps de véhicule (2) définit une portion ouverte (24a), ouverte vers un côté inférieur du corps de véhicule et formée au niveau de la portion à l'extrémité arrière de l'élément de châssis descendant (14), **en ce que** le châssis de corps de véhicule (2) comprend encore un élément transversal (26) prévu au niveau de la portion ouverte (24a), pour relier la demi-portion (21) sur le côté gauche du corps de véhicule et la demi-portion (22) sur le côté droit du corps de véhicule, et **en ce qu'**une portion ayant une section fermée est formée par la demi-portion (21) sur le côté gauche du corps de véhicule, par la demi-portion (22) sur le côté droit du corps de véhicule, et par l'élément transversal (26), et une portion pour attacher un moteur est formée au niveau de la portion ayant la section fermée, formée par la demi-portion (21) sur le côté gauche du corps de véhicule, par la demi-portion (22) sur le côté droit du corps de véhicule, et par l'élément transversal (26).

6. Motocyclette selon la revendication 5, **caractérisée en ce que** l'élément de châssis descendant (14) définissant la portion ouverte définie en outre une autre portion ouverte définie plus loin que la portion ayant la section fermée, formée par la demi-portion (21) sur le côté gauche du corps de véhicule, par la demi-portion (22) sur le côté droit du corps de véhicule, et par l'élément transversal (26) dans une direction avant/arrière du corps de véhicule.
